# FASCICULE DE BREVET EUROPEEN

(11) **EP 3 370 394 B1**
(45) Date de publication et mention de la délivrance du brevet: **11.05.2022**
(21) Numéro de dépôt: 18157078.9
(22) Date de dépôt: 16.02.2018
(51) Int. Cl.: H04L 29/08

(54) **DISPOSITIF D'ACCÈS À ADRESSAGE MULTIPLE**
ZUGANGSVORRICHTUNG MIT MEHRFACHADRESSIERUNG
ACCESS DEVICE WITH MULTIPLE ADDRESSING

(30) Priorité: 03.03.2017 FR 1751754
(43) Date de publication de la demande: 05.09.2018
(73) Titulaire: ORANGE, 92130 Issy-les-Moulineaux (FR)
(72) Inventeur: FONTAINE, Fabrice, 92326 Châtillon Cedex (FR); MARCHAND, Hervé, 92326 Châtillon Cedex (FR)

(56) Documents cités:
- EP-A1- 2 023 531
- US-A1- 2007 058 792
- US-A1- 2017 054 639

## Description

### Domaine technique

L'invention se rapporte au domaine général des réseaux de télécommunication et plus particulièrement aux communications entre un objet connecté d'un réseau local et un terminal.

De manière générale, l'invention s'applique aux équipements d'un tel réseau.

### Etat de la technique

Un réseau local, aussi appelé dans la suite réseau domestique, est un réseau informatique qui relie ensemble, avec ou sans fils, les équipements terminaux, ou plus simplement terminaux, d'une maison (ordinateurs, périphériques d'impression, de stockage, objets connectés, etc.), aptes à communiquer ensemble. Un réseau domestique comporte un équipement routeur, aussi communément appelé passerelle, élément intermédiaire assurant la redirection, ou routage, des paquets de données entre les différents terminaux et réseaux qui lui sont connectés. L'utilisateur d'un tel réseau peut exécuter un service donné sur un terminal donné disposant de caractéristiques propres (par exemple, commander une caméra, ouvrir une porte, etc.), depuis son réseau local (aussi appelé LAN) ou depuis un réseau large bande (aussi appelé WAN) via la passerelle.

Un tel terminal est appelé dans la suite un objet connecté (en anglais : IoT pour Internet of Things).

Au nombre de ces objets connectés, les dispositifs de prise d'images, ou caméras, prennent une importance considérable. Pour accéder au flux de données multimédia (images, son, vidéo) d'une caméra connectée depuis l'extérieur de son domicile, l'utilisateur doit aujourd'hui configurer la passerelle. Cette configuration permet d'accéder au flux via la passerelle, en se connectant à cette dernière sur une adresse particulière affectée au flux, depuis le réseau local ou un réseau large bande. Cependant, cette affectation est rarement optimale pour ce qui concerne les caractéristiques du flux. Il est souhaitable, dans certains cas, de recevoir des flux adaptés en termes de latence, débit, protocole de transport, etc. Or selon l'état de l'art, quelles que soient les caractéristiques souhaitables pour l'utilisateur, une fois qu'il s'est enregistré au service, il continue, indépendamment des caractéristiques de son terminal (réseau support, capacité, etc.), à accéder au même flux du service avec les mêmes caractéristiques. Par exemple, lorsque l'utilisateur rentre à son domicile, il continue à accéder au flux comme s'il était à l'extérieur du réseau local. Le flux qu'il reçoit n'est plus forcément adapté en termes de latence et qualité de la vidéo. De surcroît ceci est coûteux car continue à mobiliser inutilement des ressources de la passerelle et du réseau étendu pour piloter l'objet connecté.

Le document de l'art antérieur EP2023531 divulgue un système pour trouver des serveurs capables de délivrer un service et sélectionner le serveur approprié au contenu actuellement traité.

Le document de l'art antérieur US 2017/054639 concerne le traitement d'un paquet de données relatif à un service dans un réseau de communication mobile à l'aide d'une table de correspondance entre des services et des séquences de fonctions réseau élémentaires à appliquer à des paquets relatifs à ces services lors de l'établissement de sessions entre un terminal et une passerelle.

Le document de l'art antérieur US2007058792 décrit un processus de démarrage automatisé d'un client requérant un service, et les technologies de fourniture et d'activation pour des clients matériels et logiciels.

L'invention offre une solution ne présentant pas les inconvénients de l'état de la technique.

### L'invention

A cet effet, selon un aspect fonctionnel, l'invention a pour objet un procédé de gestion d'un service de communication à distance offert par un objet d'un réseau local à au moins un terminal d'un réseau de communication, le terminal et l'objet étant aptes à communiquer via une passerelle du réseau local, ledit procédé étant caractérisé en ce qu'il comporte les étapes suivantes exécutées par un dispositif de mise à disposition du service pour fournir au terminal au moins une adresse du service permettant d'accéder au service de l'objet :
- établissement d'une liste d'associations entre au moins une adresse du service et au moins une caractéristique associée au service ;
- obtention d'au moins un critère lié au terminal ;
- sélection d'au moins une association dans la liste des associations en fonction dudit critère lié au terminal ;
- envoi vers le terminal d'au moins une adresse du service associée à ladite au moins une association sélectionnée.

Par « service de communication », on entend ici un service offert par l'objet du réseau local associé à la passerelle, par exemple la mise à disposition d'un flux vidéo par une caméra, ou de fichiers par un disque réseau, etc.

Par « service de communication à distance », on entend que ce service peut être accédé de l'extérieur du réseau local de l'objet connecté, notamment depuis un réseau étendu, ou large bande, aussi appelé WAN (pour *Wide Area Network*).

Par « adresse du service », on entend l'adresse, par exemple une URL, à laquelle le service souhaité est accessible (par exemple, l'adresse pour obtenir le flux vidéo *streamé* de la caméra).

Par « caractéristique du service » on entend toute caractéristique technique qui peut être associée au service : débit, qualité, etc. des flux multimédia, type de protocole(s) supporté(s), type(s) de codage offert(s), etc.

Par « critère lié au terminal » on entend tout critère relatif à un terminal à un instant donné : débit disponible (sur le réseau ; par exemple, le lien remontant ADSL, limité à 1 Mbps (Mégabit par seconde) est congestionné et seulement 256 Kbps sont disponibles à cet instant), débit effectif (supporté), type(s) de protocole(s) supporté(s), type(s) de codage, etc.

Ainsi, l'invention permet au terminal, situé soit dans le réseau étendu, soit dans le réseau local, de demander au dispositif de mise à disposition du service, qui se trouve par exemple sur la passerelle de service, une adresse pour accéder au service de l'objet connecté (par exemple le flux vidéo). Le dispositif analyse un critère reçu du terminal et le compare à une liste d'associations préalablement établies pour le service. Chaque association correspond à un certain nombre de caractéristiques du service (débit, terminal local/distant, protocole, etc.). Chaque association comporte aussi une adresse locale ou distante au moins. Par comparaison du critère obtenu du terminal (indiquant par exemple que le terminal est local/distant, ou qu'il peut supporter un débit maximum) aux caractéristiques des associations, une association et donc une adresse au moins est sélectionnée dans la liste et transmise au terminal. Ceci permet avantageusement au terminal de disposer simplement du meilleur service (flux le mieux adapté) à un moment donné.

Selon un mode de mise en œuvre particulier de l'invention, un procédé tel que décrit ci-dessus est en outre caractérisé en ce que l'étape de sélection d'au moins une association est précédée des étapes de :
- envoi vers le terminal d'une adresse de la passerelle de service ;
- réception, en provenance du terminal, d'une requête d'accès au service ;
- détermination d'au moins ledit critère en fonction de la requête reçue.

Ce mode de mise en œuvre de l'invention permet de fournir une adresse générique du service au terminal, sans se soucier dans un premier temps de connaître ses caractéristiques. Dans un second temps, juste avant la mise à disposition effective du service (réception du flux), une étape de détermination du critère relatif au terminal permet de sélectionner la bonne association et de fournir la bonne adresse au terminal, c'est-à-dire l'adresse qui lui offre le meilleur service (flux) possible. Avantageusement selon ce mode, le terminal utilise toujours la même adresse générique quel que soit son emplacement, le débit du réseau support, etc. Ses caractéristiques peuvent donc changer dans le temps (l'utilisateur rentre dans le réseau local par exemple) sans qu'il soit nécessaire de modifier cette adresse.

Selon un autre mode de mise en œuvre particulier de l'invention, qui pourra être mis en œuvre alternativement ou cumulativement avec le précédent,
- ladite au moins une caractéristique du service est relative à un critère de connexion indiquant si le terminal est connecté au réseau local de la passerelle de service ;
- le critère lié au terminal indique si le terminal est connecté au réseau local de la passerelle de service.

Avantageusement selon ce mode, une ou plusieurs associations peuvent être basées sur le fait que le terminal est en local ou en distant. Le choix de l'association sera fait en fonction de ce critère. Ceci permet au terminal de bénéficier d'une adresse locale s'il est en local et distante s'il est en distant, et des caractéristiques du flux associé qui sont appropriées à un usage local (débit plus élevé et constant, latence faible, chiffrement non nécessaire, etc.) ou distant (débit plus faible mais adaptatif, latence plus élevée, chiffrement nécessaire, etc.)

Selon une variante de ce mode de mise en œuvre, l'étape de sélection détermine :
- une première association pour un critère de connexion indiquant que le terminal est connecté au réseau local de la passerelle de service ;
- une seconde association pour un critère de connexion indiquant que le terminal n'est pas connecté au réseau local de la passerelle de service ;
et l'étape d'envoi transmet vers le terminal l'adresse de la première association et l'adresse de la deuxième association déterminées.

Avantageusement selon ce mode, le procédé selon l'invention transmet deux adresses au terminal : une adresse distante et une adresse locale ; Par la suite, si le terminal souhaite accéder à l'objet alors qu'il est à l'intérieur du réseau local, il pourra avantageusement utiliser l'adresse locale. Sinon il pourra utiliser l'adresse distante. La passerelle assure classiquement (au moyen d'un NAT) la redirection d'adresses, c'est-à-dire l'établissement d'une « route » permettant d'accéder depuis l'extérieur du réseau local (sur l'adresse extérieure) au service de l'objet connecté (sur une adresse locale).

Ceci permet au terminal de décider, selon l'endroit où il se trouve (à l'intérieur ou à l'extérieur du réseau local) d'utiliser intelligemment l'une ou l'autre adresse. En effet, lorsque l'utilisateur rentre à la maison (et donc dans la portée de son réseau local) il est plus simple et moins coûteux d'accéder à l'objet via son adresse de réseau local (ce qui évite d'utiliser le routeur NAT, etc.).

Selon un autre mode de mise en œuvre particulier de l'invention, qui pourra être mis en œuvre alternativement ou cumulativement avec les précédents,
- ladite au moins une caractéristique du service est relative à un critère de débit (COD, BR).
- le critère lié au terminal indique le débit utile du terminal.

Avantageusement selon ce mode, le procédé selon l'invention permet au terminal de recevoir des flux adaptés à ses capacités en termes de débit. Différentes adresses peuvent, selon l'invention, être associées à plusieurs flux encodés à plusieurs débits. L'adresse correspondant au critère de débit du terminal est alors fournie audit terminal.

Selon un autre mode de mise en œuvre particulier de l'invention, qui pourra être mis en œuvre alternativement ou cumulativement avec les précédents :
- ladite au moins une caractéristique du service indique le protocole utilisé pour la communication ;
- l'étape de détermination d'au moins ladite caractéristique détermine si le terminal est apte à gérer ce type de protocole dans ledit réseau de communication,

Avantageusement selon ce mode, le procédé selon l'invention permet au terminal de recevoir les flux selon des protocoles de streaming adaptés à ses capacités (est-il apte, matériellement et logiciellement, à traiter ce type de protocole, par exemple HLS/HTTP ?) et au réseau support de communication dans lequel il se trouve (les composants du réseau permettent-ils de faire transiter ce type de protocole ? la sécurité du réseau l'autorise-telle ? etc.) Différentes adresses peuvent, selon l'invention, être associés à plusieurs protocoles de streaming (de la famille HTTP, RTSP, etc). L'adresse correspondant au protocole le plus adapté à un moment donné est alors fournie audit terminal.

Selon un autre mode de mise en œuvre particulier de l'invention, qui pourra être mis en œuvre alternativement ou cumulativement avec les précédents, le procédé est caractérisé en ce qu'il comporte aussi une étape de découverte de l'objet connecté.

L'étape de découverte permet au dispositif mettant en œuvre le procédé de s'approprier toutes les caractéristiques de l'objet connecté et donc du service offert à l'utilisateur (types de flux, débits, protocoles supportés, etc.). Une telle étape peut être avantageusement normalisée, par exemple en utilisant un protocole connu de découverte dans un réseau local (UPnP, DLNA, etc.)

Selon un aspect matériel, l'invention concerne également un dispositif de gestion d'un service de communication à distance entre un terminal dans un réseau de communications et un objet d'un réseau local, le terminal et l'objet étant aptes à communiquer via une passerelle du réseau local, le dispositif étant caractérisé en ce qu'il comporte les modules suivants :
- un module d'établissement d'une liste d'associations entre au moins une adresse du service et au moins une caractéristique associée au service ;
- un module d'obtention d'au moins un critère lié au terminal ;
- un module de sélection d'au moins une association dans la liste des associations en fonction dudit critère ;
- un module d'envoi vers le terminal d'au moins une adresse associée à ladite au moins une association sélectionnée.

Le terme module utilisé dans la présente description peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.)

Selon un autre aspect matériel, l'invention concerne également une passerelle comprenant un dispositif de gestion d'un service de communication à distance tel que décrit auparavant.

Selon un autre aspect matériel, l'invention concerne encore un programme d'ordinateur apte à être mis en œuvre sur un dispositif de mise à disposition tel que décrit ci-dessus, le programme comprenant des instructions de code qui, lorsque le programme est exécuté par un processeur, réalise les étapes du procédé de gestion d'un service de communication à distance entre un terminal et un objet d'un réseau local défini au-dessus.

Les objets selon les aspects matériels de l'invention procurent au moins les mêmes avantages que ceux procurés par le procédé selon le premier aspect fonctionnel. Les caractéristiques optionnelles évoquées pour le premier aspect peuvent s'appliquer aux aspects matériels.

L'invention sera mieux comprise à la lecture de la description qui suit, donnée à titre d'exemple et faite en référence aux dessins annexés.

### Les figures:

La figure 1 représente le contexte général de l'invention.
La figure 2 représente une architecture d'une passerelle domestique implémentant un mode de réalisation de l'invention.
La figure 3 représente un chronogramme des échanges entre les différents équipements selon un mode de mise en œuvre de l'invention.
La figure 4 représente un chronogramme des échanges entre les différents équipements selon un autre mode de mise en œuvre de l'invention.

### Description détaillée d'un exemple de réalisation illustrant l'invention

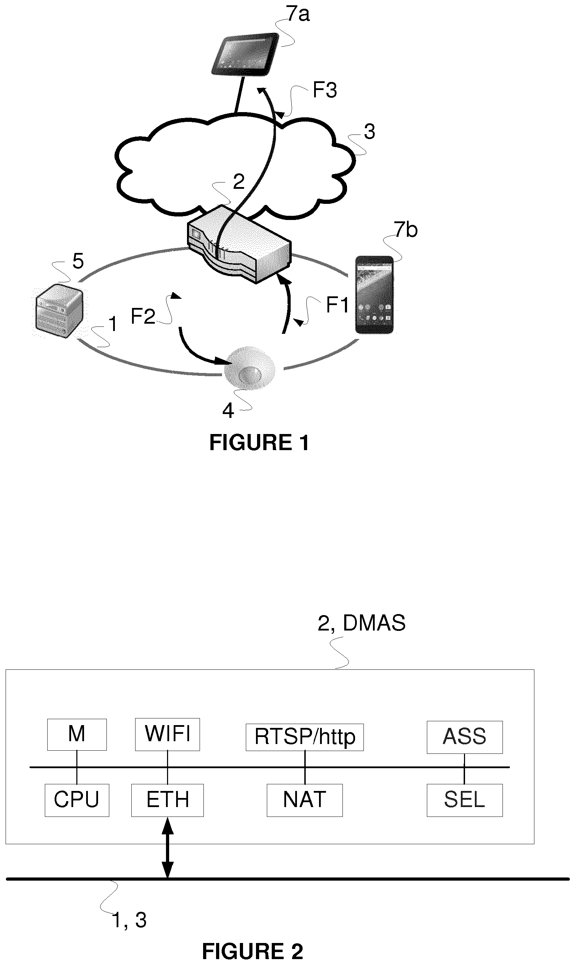

La **figure 1** représente le contexte général de l'invention selon l'état de l'art, dans lequel un réseau de télécommunication comporte un réseau local ou LAN (Local Area Network) 1, aussi appelé réseau domestique, et un réseau de type étendu, ou WAN (Wide Area Network), 3. Selon cet exemple, le réseau WAN est un réseau Internet. Plus largement, le réseau 3 pourrait être de n'importe quel type (cellulaire, GSM - Global System for Mobile Communications, UMTS - Universal Mobile Telecommunications System, Wifi - Wireless, etc.) sans sortir du cadre de l'invention. Le réseau local 1 comprend une passerelle 2, par exemple de type Livebox, connectée au réseau Internet 3. Le réseau local 1 comprend également un ensemble de terminaux, selon l'exemple une caméra 4 et un disque dur de type NAS (pour « Network Access Storage ») 5. Les équipements 4, 5 sont connectés à la passerelle 2, avec ou sans fils, dans le réseau local.

La passerelle propose par ailleurs une offre de services d'accès à distance à un ensemble de clients comme par exemple un utilisateur des terminaux 7a et 7b.

Le terminal client 7a est dans cet exemple une tablette informatique, et le terminal client 7b un mobile de type smartphone ; aux deux terminaux sont associées des fonctions informatiques et de navigation Internet qui les rendent aptes à communiquer sur le réseau Internet (3), ou sur le réseau local (1), avec les équipements 2,4,5. Dans cet exemple, le terminal client souhaite accéder au flux de la caméra 4, c'est-à-dire au service multimédia à distance proposé par la caméra 4. Le terminal client 7a/7b dispose par exemple d'un client Web ; une page applicative du service à distance est typiquement présentée sur le terminal 7a/7b au moyen d'un navigateur Web qui lui permet de recevoir et visualiser le flux de la caméra 4.

Dans la suite, on entend par « service » toute communication entre un terminal et un objet du réseau local, et par « terminal », ou « terminal client » tout dispositif (tablette, smartphone, ordinateur portable, etc.) apte à se connecter et à accéder au réseau local via la passerelle de service 2, qu'il soit « en local » comme le terminal 7b de l'exemple (c'est-à-dire qu'il est connecté à la passerelle dans le réseau local) ou « en distant » comme le terminal 7a (c'est-à-dire qu'il est connectable à la passerelle de service depuis le réseau étendu). Un terminal donné peut être en mobilité, tantôt en local (lorsque l'utilisateur est à la maison par exemple) et tantôt en distant (lorsque l'utilisateur est au travail, par exemple).

Le terminal reçoit classiquement, selon cet exemple, le flux de la caméra (le service) en téléchargement progressif ou « streaming », en utilisant typiquement l'une des familles de protocoles HTTP/HTTPS ou RTSP. On rappelle que :
- HTTP (de l'anglais Hyper Text Transport Protocol) est un protocole de communication client-serveur développé pour les réseaux Internet. HTTPS est une déclinaison sécurisée de HTTP. Il est fréquent, dans ce contexte du protocole HTTP, de recourir, pour échanger les données entre le terminal client et le serveur, à une technique de type dit « streaming adaptatif » (HAS pour « HTTP Adaptive Streaming »). Ce type de technique permet notamment d'offrir une bonne expérience à l'utilisateur tout en tenant compte, par exemple, des variations de bande passante sur la liaison entre le terminal client et le serveur de contenus, ici la caméra du réseau local. Classiquement, différents flux peuvent être encodés, ou transcodés, pour le même contenu multimédia, par exemple une vidéo numérique, correspondant à différents débits, différentes résolutions, différentes qualités. Le codage d'une vidéo a pour but de fournir une représentation du contenu initial de la vidéo conforme à certains paramètres (débit moyen, débit instantané, norme de codage-décodage utilisée, résolution spatiale, fréquentielle, etc.) sous une forme généralement plus compacte. Le transcodage consiste à ré-encoder une vidéo déjà encodée, avec de nouveaux paramètres. Chaque niveau est lui-même découpé en segments temporels, aussi appelés « fragments » (ou « chunks » en anglais) correspondant généralement à quelques secondes de contenu. Ces différents niveaux et la segmentation associée sont généralement décrits dans un fichier de description. Il existe plusieurs solutions pour faciliter la mise à disposition et distribution d'un tel contenu en streaming, comme par exemple les solutions propriétaires Microsoft Smooth Streaming et Apple HTTP Live Streaming (HLS), ou encore la norme MPEG DASH (pour Dynamic Adaptive Streaming over HTTP - ISO/IEC 23009-1:2012(E)), une norme de l'organisme ISO/IEC dédiée au streaming de contenus multimédia sur Internet.
- RTSP (de l'anglais Real Time Streaming Protocol) permet aussi de contrôler la distribution de flux multimédias en streaming sur un réseau IP. C'est un protocole de niveau applicatif prévu pour fonctionner sur des protocoles de transport tels que RTP/RTCP.

La plupart des caméras vidéo du marché utilisent soit le protocole RTSP, soit un protocole de téléchargement progressif comme Apple HLS, MPEG-DASH, etc. sur HTTP. Chacune des deux familles protocolaires possède ses avantages et ses inconvénients en termes de fiabilité, latence, etc.

La passerelle 2 comporte classiquement un routeur NAT (Network Address Translation), qui a pour fonction, de manière bien connue, de faire correspondre les adresses IP internes du réseau local 1 à un ensemble d'adresses utilisables sur le réseau étendu 3. Pour gérer la traversée du routeur NAT, on peut utiliser divers protocoles, par exemple SNMP (Simple Network Management Protocol), ou STUN (Simple Traversal of UDP through NATs, avec UDP pour « User Datagram Protocol »), ou encore UPnP IGD (Universal Plug and Play - Internet Gateway Device). La configuration peut être faite manuellement (via une interface Web par exemple) ou automatiquement.

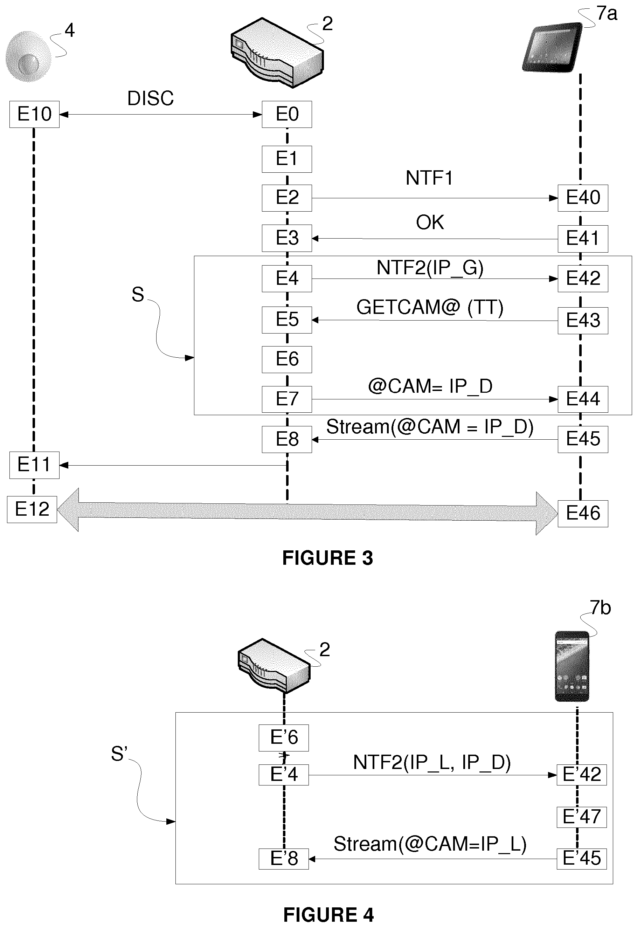

En se référant à la figure 1, on décrit à titre d'exemple un procédé d'initialisation d'un objet du réseau local en vue de son accès depuis l'extérieur du réseau local, par exemple la caméra 4, selon l'état de l'art UPnP IGD. Le procédé d'initialisation d'un autre objet du réseau local 1 (par exemple le NAS 5) serait similaire. Le procédé d'initialisation est de préférence mis en œuvre automatiquement lors de chaque initialisation du réseau, c'est-à-dire à chaque démarrage de l'objet 4, ou à chaque fois que l'équipement 4 et/ou la passerelle 2 changent d'adresse IP. Lors d'une première étape, la caméra 4 émet à destination de la passerelle 2 une requête de configuration du routeur NAT et de détermination d'une adresse IP publique (par exemple via un message « UPnP AddPortMapping »). Cette étape est symbolisée par la flèche F1 sur la figure 1. La passerelle 2 répond à la requête en transmettant à l'équipement 4 un message contenant une adresse IP publique et un numéro de port qu'elle a choisi (par exemple, 50000). Cette étape est symbolisée par la flèche F2 sur la figure 3. La caméra 4 mémorise l'adresse IP publique et le numéro de port, pour permettre la mise en œuvre ultérieure d'un service, par exemple l'accès au flux de la caméra 4 depuis le terminal 7a de l'utilisateur, connecté au réseau Internet 3. Le port attribué peut être visualisé via l'interface Web de la caméra, ou transmis par exemple à une application du fabricant. Le terminal 7a en prend connaissance. Lorsque l'utilisateur du terminal 7a veut accéder au flux vidéo de la caméra, il se connecte via son navigateur Internet à l'adresse IP publique de sa passerelle 2 sur le port associé à la caméra et reçoit le flux. Cette étape est symbolisée par la flèche F3 sur la figure 3. On note les inconvénients suivants :
- Puisque la caméra 4 ne peut pas savoir à quel moment le client aura besoin d'accéder au flux, la traversée du routeur NAT de la passerelle est réalisée de manière permanente, y compris lorsque le terminal est à l'intérieur du réseau local. Ce type de procédé n'est donc pas sécurisé car n'importe qui connaissant l'adresse IP et le numéro de port peut accéder au flux de la caméra, qui n'est généralement pas chiffré ; or il existe aujourd'hui des applications qui permettent de se procurer aisément l'adresse et le numéro de port d'un objet connecté.
- une fois que le terminal a reçu et accepté les caractéristiques de la caméra, les caractéristiques du flux reçu de la caméra seront quasiment toujours les mêmes. En effet, même si les techniques de streaming adaptatif (HLS, DASH, etc.) permettent d'adapter une partie des caractéristiques (notamment la qualité et le débit) celles-ci ne permettent pas de changer la sécurité appliquée (HTTP ou HTTPS), la latence (toujours la même et plus importante que d'autres types de protocole tel que le RTSP) ou le protocole de transport du flux multimédia.

Or il est parfois souhaitable de disposer de caractéristiques différentes selon certains critères liés au terminal et/ou au réseau. Par exemple :
∘ le débit peut être avantageusement plus élevé en local qu'en distant ;
∘ la sécurité peut être plus faible en local, les risques d'intrusion étant moins élevés et le flux vidéo ne passant pas des tiers, en effet, dans le réseau local, la sécurité est principalement assurée par la sécurité WiFi (WPS, clé WPA) ou la nécessité d'être connecté physiquement (Ethernet) ;
∘ la latence doit être plus faible en local car l'utilisateur qui est proche de la caméra ne pourra accepter une latence trop élevée (c'est-à-dire un décalage temporel) entre le flux capturé par la caméra et le flux restitué sur son terminal ;
∘ le protocole peut être préférentiellement RTSP en local, et HTTP en distant car ce dernier présente moins de problèmes au passage des multiples composants du réseau (pare-feu, proxy, routeur ...), notamment du réseau mobile ;
∘ les contraintes de sécurité peuvent être plus élevées pour un terminal basé sur le système iOS que pour un terminal basé sur un système Android. En effet, les contraintes imposées aux terminaux iOS sont plus strictes (liste d'autorité de certification, certificat auto-signé interdit, etc.) que celles imposées à Android pour diffuser du HLS en HTTPS.
∘ etc.

L'invention propose donc d'utiliser un dispositif intelligent de mise à disposition du service (ici, le service d'accès au flux vidéo de la caméra), noté dans la suite DMAS, situé typiquement sur la passerelle, qui permette de bénéficier automatiquement des meilleurs compromis, que l'utilisateur soit en local ou en distant.

On va maintenant décrire l'invention à l'appui des figures 2, 3 et 4.

La figure 2 représente l'architecture d'un équipement qui implémente un mode de réalisation de l'invention.

La passerelle 2 comprend, classiquement, des mémoires (M) associées à un processeur (CPU). Les mémoires peuvent être de type ROM (de l'anglais *Read Only Memory*) ou RAM (de l'anglais *Random Access Memory*) ou encore Flash. Une partie de la mémoire M contient notamment, selon l'invention, la partie logicielle du dispositif de l'invention. Elle comprend aussi un module de routage NAT pour assurer la redirection, ou routage, des paquets de données entre les différents terminaux et réseaux qui lui sont connectés. La passerelle 2 comporte encore un certain nombre de modules qui lui permettent de communiquer avec les réseaux 1, 3 via différents protocoles sur différents liens physiques ; sur la figure 2, on a ainsi schématisé un module Ethernet (ETH) permettant des communications filaires avec le réseau internet et le réseau local 1, et un module Wi-Fi (WIFI) pour les communications sans fils. Un module RTSP (Real Time Streaming Protocol)/HTTP permet de contrôler la distribution de flux multimédias (streaming) sur un réseau IP en utilisant l'un ou l'autre de ces protocoles.

La passerelle 2 comporte enfin, selon l'invention, un dispositif de mise à disposition DMAS de services du réseau local, l'accès se faisant en local ou en distant. Il inclut notamment
- un module ASS pour l'analyse et l'établissement d'une liste d'associations possibles entre une adresse permettant d'accéder au service (au flux de la caméra selon l'exemple choisi) et certaines caractéristiques dudit service,
- un module de décision SEL permettent de sélectionner une association (et donc une adresse) dans la liste, en fonction des caractéristiques propres au terminal (local ou distant, etc.) qui requiert le service.

La figure 3 représente les échanges entre le terminal client 7a ou 7b, la passerelle 2, et l'objet connecté 4, ou caméra selon cet exemple.

Ce mode de réalisation de l'invention utilise un certain nombre de mécanismes de normes connues déjà mentionnées (HTTP, HTTPS, RTSP, HLS, etc.).

On rappelle que la passerelle est selon cet exemple une passerelle standard de type Livebox équipée notamment d'un routeur NAT et de différents modules de communication, ainsi que d'un dispositif de mise à disposition du service (DMAS) comprenant un module d'association (ASS) et un module de sélection (SEL). On notera que, dans ce mode de réalisation de l'invention, le dispositif de mise à disposition du service est dans la passerelle de service mais qu'il pourrait être situé ailleurs dans le réseau étendu et/ou dans le réseau local à condition de disposer des modules adéquats, notamment de communication, d'association et de sélection.

Les étapes E0 et E10 correspondent à des étapes classiques de découverte de la caméra par la passerelle, en utilisant selon cet exemple le protocole UPnP. Ce message, noté DISC peut prendre la forme d'un message *discovery* de la norme *UPnP.* On rappelle que la norme UPnP (de l'anglais Universal Plug and Play), propose un ensemble de protocoles ayant pour but de permettre à des terminaux de se connecter et de communiquer au sein d'un réseau local. Elle constitue un ensemble de protocoles de communication basés sur le protocole IP et promulgué par le forum de normalisation UPnP (« UPnP Forum »). Pour contrôler les terminaux du réseau, UPnP utilise des points de contrôle, émettant classiquement vers les différents terminaux du réseau des messages dits de découverte, afin de récupérer en retour une description des terminaux correspondant à la requête. Un équipement terminal compatible avec la norme UPnP, selon cet exemple la caméra 4 (ou le NAS 5) répond à ces messages de requête en fournissant ses caractéristiques (type de terminal, capacités matérielles et logicielles, etc.). Tout autre protocole offrant les mêmes capacités de communication dans le réseau local pourrait être utilisé alternativement, comme par exemple « Apple mDNS ».

Lorsqu'elle a récupéré la description de la caméra, la passerelle 2 enregistre les informations pertinentes relatives à l'objet connecté, par exemple :
- L'adresse MAC de la camera, une adresse unique notée @MAC, («Media Access Control ») permettant d'identifier le terminal sans ambiguïté ;
- Le nom de la camera (CAM), le modèle, le fabricant, etc.
- L'adresse IP locale de la camera dans le réseau local, notée IP_L dans la suite.
- Le port de l'API (pour *Application Programming Interface*) permettant de configurer la camera, par exemple le numéro de port 80 si celle-ci à une interface normalisée de type HTTP CGI sur ce numéro de port ;
- les capacités multimédia de la caméra :
   ∘ en termes de protocoles supportés (streaming adaptatif de type HLS, DASH, sécurisé ou non par un transport HTTPS/HTTP, RTSP, etc.) ;
   ∘ en termes de formats (encodage, débits, qualités, etc.) des médias utilisés (vidéo, image fixe, audio, etc.).

Lors d'une étape E1 qui suit l'étape EO de découverte, le module ASS de la passerelle construit un ensemble d'associations entre :
- une ou plusieurs adresses locales (IP_L) et un ensemble de caractéristiques proposées par la caméra ;
- une ou plusieurs adresses distantes (IP_D) et un ensemble de caractéristiques proposées par la caméra.

Une telle étape permet d'aboutir par exemple à une représentation du type de celle donnée ci-dessous sous forme de table d'association, dans laquelle:
- la colonne « streaming » (STR) indique le protocole de streaming, ou téléchargement (progressif), utilisé pour acquérir et transporter les données multimédia de la caméra en temps réel. Selon cet exemple, les protocoles de streaming utilisés peuvent être basés sur HTTP (s) ou RTSP.
- la colonne « codage » (COD) indique le type de codage utilisé pour la vidéo. Naturellement, du son ou tout autre média peut lui être adjoint avec son propre format sans perte de généralité.
- La colonne débit (BR) indique le débit utile du flux généré (qui correspond à un compromis entre la qualité et le taux de compression de la vidéo) en mégabits par seconde. Ce débit peut être composé d'une valeur minimale et maximale pour les protocoles adaptatifs comme le HLS ou le DASH.
- la colonne adresse (IP_X) indique une adresse pour accéder au flux du service, par exemple une URL ou une combinaison (adresse IP : numéro de port). Il peut s'agir d'une adresse locale (l'adresse de la caméra) si le terminal est en local, ou d'une adresse distante (l'adresse de la passerelle) si le terminal est distant. Dans cet exemple de réalisation, on privilégie l'utilisation de HTTPS quand le terminal est distant et de RTSP dans le réseau local. En effet, il est préférable d'utiliser un protocole HLS sur HTTPS pour la sécurité et le passage des proxy/firewall des réseaux, notamment mobiles. Par contre, HLS sur HTTPS a une forte latence (de l'ordre de trente secondes). En local, on privilégie donc le RTSP qui n'est pas crypté et qui n'a quasiment aucune latence. On notera que :
   ∘ les adresses distantes comprennent toutes une adresse IP externe de la passerelle de service (ici, 443.176.1.10 ou 443.176.1.11) et un numéro de port qui peut être choisi de manière aléatoire ;
   ∘ les adresses locales (192.168.X.X) correspondent à un plan d'adressage classique de réseau local IPv4;
   ∘ les adresses IPv6 correspondent à un plan d'adressage classique de réseau local IPv6 avec des adresses de type « Unique Local Addresses » (dans le bloc fd00::/8) et des adresses de type « Globally Unique Addresses » (dans le bloc 2000::/3).
- la colonne « nom » (AS_X) indique le nom de l'association. Un suffixe « D » indique une adresse distante et un suffixe « L » une adresse locale.

| Streaming (STR) | codage (COD) | débit (BR) | Adresse (IP_X) | Nom (AS_X) |
|---|---|---|---|---|
| HLS/HTTP | MPEG4 | 1 à 4 | 143.176.1.10 : 80 | AS_D1 |
| DASH/ HTTP | HEVC | 2 à 4 | 143.176.1.11 : 80 | AS_D2 |
| HLS/HTTPS | HEVC | 2 à 4 | 143.176.1.10 : 443 | AS_D3 |
| HLS/HTTPS | HEVC | 2 à 4 | [2000:db8:0:85a3::ac1f:8001] : 443 | AS_D4 |
| RTSP | MPEG4 | 1 | 192.168.1.10 : 554 | AS_L1 |
| RTSP | HEVC | 4 | 192.168.1.11 : 8554 | AS_L2 |
| RTSP | HEVC | 16 | 192.168.1.12 : 8554 | AS_L3 |
| RTSP | HEVC | 16 | [fd00:db8:0:85a3::ac1f:8001] : 554 | AS_L4 |

### Exemple de table d'association construite par le module ASS

Lors d'une étape E2, qui peut précéder ou suivre l'étape E1, la passerelle avertit l'utilisateur du terminal 7 et lui demande s'il veut rajouter cette caméra à son offre de services d'accès à distance. Cette étape est optionnelle. Ce message, noté NTF1, peut prendre la forme d'un simple SMS (Short Message Service) adressé au terminal.

L'utilisateur reçoit la notification au cours d'une étape E40, et s'il l'accepte, un message d'acquittement est renvoyé lors d'une étape E41 à la passerelle, qui reçoit la réponse lors d'une étape E3 (notée OK).

Lors d'une étape E4, la passerelle transmet au terminal une notification avec une adresse (URL ou combinaison IP/port, etc.) notée IP_G. Il s'agit selon cet exemple d'une adresse générique correspondant à celle de la passerelle (adresse externe sur le réseau étendu) qui va gérer par la suite l'attribution d'une adresse locale ou distante au terminal. Selon une variante présentée à la figure 4, deux adresses sont fournies au terminal lors d'une étape E'4 (une adresse locale IP_L, et une adresse distante IP_D).

Lors d'une étape E5 qui la suit, l'utilisateur du terminal ayant décidé d'accéder au flux de la caméra, la passerelle reçoit une requête du terminal visant à obtenir l'adresse de la caméra Cette requête peut contenir des informations qui pourraient être utilisées dans l'étape E6 par exemple le type de terminal (iOS ou Android), la capacité de décodage des flux vidéos (support du RTSP ou de certains codecs), le type et les capacités des composants réseaux entre le terminal et la passerelle. Cette étape est notée sur la figure GETCAM@(TT) à titre illustratif, le paramètre TT correspondant au type de terminal.

Lors d'une étape E6, la passerelle détermine un ou plusieurs critères relatifs au terminal qui a émis la requête, ou au réseau sur lequel se trouve ce terminal, et sélectionne une adresse en fonction de ce(s) critère(s). Selon l'exemple donné à l'appui de ce mode de réalisation, la sélection se fait sur la base de la table des associations présentée plus haut, et le premier critère utilisé est le critère local/distant. On rappelle que, selon l'invention :
- une adresse locale (IP_L) peut servir à avoir un accès direct au flux quand le terminal 7b est dans le réseau local, à condition d'être effectivement connecté au réseau local (via par exemple son module Wi-Fi ; si le module Wi-Fi est désactivé, il peut naturellement utiliser une adresse distante et passer par le réseau mobile 3G/4G).
- une adresse distante (IP_D) peut servir à avoir un accès au flux quand le terminal est distant ; elle pointe sur l'adresse IP réseau externe de la passerelle, auquel est associé un numéro de port, de préférence aléatoire.

Pour définir si un utilisateur est en local ou à distance le module SEL de la passerelle peut s'appuyer sur différents éléments qui sont à disposition. La passerelle 2 possède en effet à tout moment en mémoire une liste (table d'identifiants comprenant les identifiants uniques des terminaux domestiques qui ont déjà été autorisés à accéder au réseau domestique via le point d'accès, éléments de routage, etc.) de tous les terminaux du réseau local et peut indiquer par simple consultation de table si un terminal donné est connecté ou non à la passerelle.

Toute autre alternative à la portée de l'homme du métier (interrogation d'un serveur du fabricant, etc.) peut être utilisée alternativement.

Un autre critère peut alors être utilisé pour la sélection finale du flux dans la liste des associations possibles. Par exemple, un critère de débit : si le terminal est en local (critère 1) et peut supporter un débit élevé (critère 2) l'adresse 192.168.1.12 : 8554 correspondant à l'association AS_L3 (débit de 16 Mbps) peut lui être attribuée. En revanche si le réseau local est saturé, on peut lui attribuer l'adresse de AS_L1 (débit de 1 Mbps).

A l'issue de cette étape, la passerelle transmet au terminal, lors d'une étape E7, l'adresse sélectionnée. Dans l'exemple de la figure 4, le terminal 7a étant distant, le message @CAM=IP_D symbolise la remise au terminal d'une adresse distante. Il peut par exemple s'agir d'un message HTTP/ RTSP *redirect.*

On notera que cette étape doit être réitérée si elle contient l'adresse IP locale (de même que les étapes EO et E1) lorsque la caméra et/ou la passerelle change d'adresse (par exemple, parce que la passerelle a été réinitialisée).

Lors d'une étape E45, l'application sur le terminal 7 de l'utilisateur accède au flux. Ce message, noté STREAM(@CAM), peut prendre par exemple la forme d'une message *HTTP*/*RTSP GET (Get Camera streaming URL with IP*/*port)*

Sur réception de ce message, la passerelle « ouvre » le NAT (ou pare-feu) lors d'une étape **E8,** c'est-à-dire qu'elle établit une ouverture, ou route, entre la caméra (spécifiée par son adresse IP privée - IP_L - et son numéro de port privé) et l'adresse externe de la passerelle, ou adresse distante IP_D. Naturellement, si une adresse locale a été fournie, l'intervention du NAT n'est pas nécessaire.

Les étapes E4 à E7 et leurs étapes correspondantes sur le terminal sont notées appartenir au bloc « S » selon ce premier mode de réalisation de l'invention.

La figure 4 représente un autre mode de réalisation pour lequel l'ensemble d'étapes S est remplacé par un ensemble S' alors que les étapes E0 à E3 sont identiques.

Dans cette variante, deux adresses sont fournies au terminal lors d'une étape E'4 (adresse locale IP_L, adresse distante IP_D). Ces deux adresses sont issues du résultat de la sélection établie par le module SEL de la passerelle lors d'une étape E'6 préalable au cours de laquelle deux adresses (une locale et une distante) ont été sélectionnées par le procédé selon l'invention, par exemple les adresses des associations AS_D1 et AS_L1 . Ces deux adresses peuvent être, comme décrit à l'appui de l'étape E6 précédente, sélectionnées sur la base d'un certain nombre de critères (débit, latence, protocole, etc.). On notera que cette étape doit être réitérée lorsque la caméra et/ou la passerelle change d'adresse (par exemple, parce que la passerelle a été réinitialisée) puisqu'elle contient l'adresse IP locale.

Lors d'une étape E'47, le terminal choisit l'adresse qu'il va utiliser pour accéder à la caméra, de préférence l'adresse distante s'il est à l'extérieur du réseau local et l'adresse locale lorsqu'il est situé dans le réseau local (connecté à la passerelle de service). Toute technique à la portée de l'homme du métier peut être utilisée pour décider si le terminal utilise l'adresse locale ou l'adresse distante. On peut par exemple imaginer de mettre en place, au niveau du terminal, un mécanisme simple consistant, une fois les deux adresses acquises (adresse locale et adresse distante) à choisir entre un accès local (LAN) et un accès distant (WAN). On peut alors essayer successivement le LAN via l'adresse locale, puis en cas d'erreur (adresse locale invalide), le WAN via l'adresse distante. Selon un autre exemple, on pourrait utiliser le fait que le terminal est connecté au réseau local (WiFi) ou au réseau mobile (4G ou autre). On notera cependant qu'on pourrait être connecté à un autre réseau Wi-Fi que celui du domicile. Pour être sûr d'être sur le bon réseau WiFi, il faudrait avoir de surcroît un mécanisme permettant de détecter et de mémoriser le SSID de la passerelle ou la géolocalisation de la maison. Puis, ensuite, vérifier cette information avant de tenter un accès sur le LAN.

## Revendications

1. Procédé de gestion d'un service (S) de communication à distance offert par un objet (4,5) d'un réseau local à au moins un terminal (7a, 7b) d'un réseau de communications (1, 3), le terminal et l'objet étant aptes à communiquer via une passerelle (2) du réseau local (1), ledit procédé étant **caractérisé en ce qu'**il comporte les étapes suivantes exécutées par un dispositif de mise à disposition du service (2, DMAS) pour fournir au terminal au moins une adresse du service (IP_X) permettant d'accéder au service de l'objet :
- établissement (E1) d'une liste d'associations (AS_X) entre au moins une adresse du service (IP_X) et au moins une caractéristique (STR, COD, BR, L/D) associée au service ;
- obtention (E6, E'6) d'au moins un critère (STR, COD, BR, L/D) lié au terminal ;
- sélection (E6) d'au moins une association (AS_X) dans la liste des associations en fonction dudit critère lié au terminal (STR, COD, BR, L/D) ;
- envoi vers le terminal (E7, E'4) d'au moins une adresse du service (IP_X) associée à ladite au moins une association (AS_X) sélectionnée.

2. Procédé selon la revendication 1, **caractérisé en ce que** l'étape de sélection d'au moins une association est précédée des étapes de :
- envoi (E4) vers le terminal d'une adresse (IP_G) de la passerelle de service (2) ;
- réception (E5), en provenance du terminal, d'une requête (GETCAM@) d'accès au service ;
- détermination (E5) d'au moins ledit critère lié au terminal (STR, COD, BR, L/D) en fonction de la requête reçue.

3. Procédé selon la revendication 1, dans lequel :
- ladite au moins une caractéristique (STR, COD, BR, L/D) du service est relative à un critère de connexion (L/D) indiquant si le terminal (7a, 7b) est connecté au réseau local de la passerelle de service (2) ;
- le critère (STR, COD, BR, L/D) lié au terminal indique si le terminal est connecté au réseau local de la passerelle de service.

4. Procédé selon la revendication 3, **caractérisé en ce que** l'étape de sélection détermine :
- une première association (AS_L1, L2, L3) pour un critère de connexion indiquant que le terminal (7b) est connecté au réseau local de la passerelle de service (2) ;
- une seconde association (AS_D1, D2, D3) pour un critère de connexion indiquant que le terminal (7a) n'est pas connecté au réseau local de la passerelle de service (2) ;
et **en ce que** l'étape d'envoi transmet vers le terminal l'adresse du service de la première association et l'adresse du service de la deuxième association déterminées.

5. Procédé selon la revendication 1, dans lequel :
- ladite au moins une caractéristique (STR, COD, BR, L/D) du service est relative à un critère de débit (COD, BR).
- le critère (STR, COD, BR, L/D) lié au terminal indique le débit utile du terminal.

6. Procédé selon la revendication 1, dans lequel :
- ladite au moins une caractéristique (STR, COD, BR, L/D) du service indique le protocole utilisé pour la communication (RTSP, HTTP) ;
- le critère lié au terminal indique si le terminal est apte à gérer ce type de protocole dans ledit réseau de communication.

7. Procédé selon la revendication 1, **caractérisé en ce qu'**il comporte aussi une étape de découverte (E0) de l'objet connecté.

8. Dispositif (DMAS) de gestion d'un service (S) de communication à distance offert par un objet (4,5) d'un réseau local à au moins un terminal (7a, 7b) d'un réseau de communications (1,3), le terminal et l'objet étant aptes à communiquer via une passerelle (2) du réseau local (1), le dispositif étant **caractérisé en ce qu'**il comporte les modules suivants pour fournir au terminal au moins une adresse du service (IP_X) permettant d'accéder au service de l'objet :
- un module d'établissement (ASS) d'une liste d'associations (AS_X) entre au moins une adresse du service (IP_X) et au moins une caractéristique (STR, COD, BR, L/D) associée au service ;
- un module d'obtention (SEL, E6, E'6) d'au moins un critère (STR, COD, BR, L/D) lié au terminal ;
- un module de sélection (SEL) d'au moins une association (AS_X) dans la liste des associations en fonction dudit critère lié au terminal (STR, COD, BR, L/D);
- un module d'envoi (WIFI, ETH) vers le terminal (7a, 7b) d'au moins une adresse du service (IP_X) associée à ladite au moins une association (AS_X) sélectionnée.

9. Passerelle (2) comprenant un dispositif de gestion d'un service (S) de communication à distance selon la revendication 9.

10. Programme d'ordinateur apte à être mis en œuvre sur un dispositif de gestion selon la revendication 9, le programme comprenant des instructions de code qui, lorsque le programme est exécuté par un processeur, réalise les étapes du procédé défini selon la revendication 1.

## Patentansprüche

1. Verfahren zum Verwalten eines Fernkommunikationsdienstes (S), der durch ein Objekt (4, 5) eines lokalen Netzwerks mindestens einem Endgerät (7a, 7b) eines Kommunikationsnetzes (1, 3) angeboten wird, wobei das Endgerät und das Objekt dazu geeignet sind, über ein Gateway (2) des lokalen Netzwerks (1) zu kommunizieren, wobei das Verfahren **dadurch gekennzeichnet ist, dass** es die folgenden Schritte umfasst, die durch eine Dienstbereitstellungsvorrichtung (2, DMAS) ausgeführt werden, um dem Endgerät mindestens eine Dienstadresse (IP_X) bereitzustellen, die es ermöglicht, auf den Dienst des Objekts zuzugreifen:
- Erstellen (E1) einer Liste von Verknüpfungen (AS_X) zwischen mindestens einer Dienstadresse (IP_X) und mindestens einer mit dem Dienst verknüpften Eigenschaft (STR, COD, BR, L/D);
- Erhalten (E6, E'6) mindestens eines auf das Endgerät bezogenen Kriteriums (STR, COD, BR, L/D);
- Auswählen (E6) mindestens einer Verknüpfung (AS_X) aus der Liste der Verknüpfungen in Abhängigkeit von dem auf das Endgerät bezogenen Kriterium (STR, COD, BR, L/D);
- Senden mindestens einer Dienstadresse (IP_X), die mit der mindestens einen ausgewählten Verknüpfung (AS_X) verknüpft ist, an das Endgerät (E7, E'4).

2. Verfahren nach Anspruch 1, **dadurch gekennzeichnet, dass** dem Schritt des Auswählens mindestens einer Verknüpfung die folgenden Schritte vorausgehen:
- Senden (E4) einer Adresse (IP_G) des Dienst-Gateways (2) an das Endgerät;
- Empfangen (E5) einer Anfrage (GETCAM@) vom Endgerät für den Zugang zum Dienst;
- Bestimmen (E5) mindestens des auf das Endgerät bezogenen Kriteriums (STR, COD, BR, L/D) in Abhängigkeit von der empfangenen Anfrage.

3. Verfahren nach Anspruch 1, wobei:
- die mindestens eine Eigenschaft (STR, COD, BR, L/D) des Dienstes in Zusammenhang mit einem Verbindungskriterium (L/D) steht, das angibt, ob das Endgerät (7a, 7b) mit dem lokalen Netzwerk des Dienst-Gateways (2) verbunden ist;
- das auf das Endgerät bezogene Kriterium (STR, COD, BR, L/D) angibt, ob das Endgerät mit dem lokalen Netzwerk des Dienst-Gateways verbunden ist.

4. Verfahren nach Anspruch 3, **dadurch gekennzeichnet, dass** der Schritt des Auswählens Folgendes bestimmt:
- eine erste Verknüpfung (AS_L1, L2, L3) für ein Verbindungskriterium, das angibt, dass das Endgerät (7b) mit dem lokalen Netzwerk des Dienst-Gateways (2) verbunden ist;
- eine zweite Verknüpfung (AS_D1, D2, D3) für ein Verbindungskriterium, das angibt, dass das Endgerät (7a) nicht mit dem lokalen Netzwerk des Dienst-Gateways (2) verbunden ist;
und dadurch, dass der Schritt des Sendens die Dienstadresse der ersten Verknüpfung und die Dienstadresse der zweiten Verknüpfung, die bestimmt wurden, an das Endgerät übermittelt.

5. Verfahren nach Anspruch 1, wobei:
- die mindestens eine Eigenschaft (STR, COD, BR, L/D) des Dienstes in Zusammenhang mit einem Durchsatzkriterium (COD, BR) steht;
- das auf das Endgerät bezogene Kriterium (STR, COD, BR, L/D) den Nutzdurchsatz des Endgeräts angibt.

6. Verfahren nach Anspruch 1, wobei:
- die mindestens eine Eigenschaft (STR, COD, BR, L/D) des Dienstes das Protokoll angibt, das für die Kommunikation verwendet wird (RTSP, HTTP);
- das auf das Endgerät bezogene Kriterium angibt, ob das Endgerät dazu geeignet ist, diesen Protokolltyp im Kommunikationsnetz zu verwalten.

7. Verfahren nach Anspruch 1, **dadurch gekennzeichnet, dass** es auch einen Schritt des Auffindens (E0) des verbundenen Objekts umfasst.

8. Vorrichtung (DMAS) zum Verwalten eines Fernkommunikationsdienstes (S), der durch ein Objekt (4, 5) eines lokalen Netzwerks mindestens einem Endgerät (7a, 7b) eines Kommunikationsnetzes (1, 3) angeboten wird, wobei das Endgerät und das Objekt dazu geeignet sind, über ein Gateway (2) des lokalen Netzwerks (1) zu kommunizieren, wobei die Vorrichtung **dadurch gekennzeichnet ist, dass** sie die folgenden Module umfasst, um dem Endgerät mindestens eine Dienstadresse (IP_X) bereitzustellen, die es ermöglicht, auf den Dienst des Objekts zuzugreifen:
- ein Modul zum Erstellen (ASS) einer Liste von Verknüpfungen (AS_X) zwischen mindestens einer Dienstadresse (IP_X) und mindestens einer mit dem Dienst verknüpften Eigenschaft (STR, COD, BR, L/D);
- ein Modul zum Erhalten (SEL, E6, E'6) mindestens eines auf das Endgerät bezogenen Kriteriums (STR, COD, BR, L/D);
- ein Modul zum Auswählen (SEL) mindestens einer Verknüpfung (AS_X) aus der Liste der Verknüpfungen in Abhängigkeit von dem auf das Endgerät bezogenen Kriterium (STR, COD, BR, L/D);
- ein Modul zum Senden (WIFI, ETH) mindestens einer Dienstadresse (IP_X), die mit der mindestens einen ausgewählten Verknüpfung (AS_X) verknüpft ist, an das Endgerät (7a, 7b).

9. Gateway (2), das eine Vorrichtung zum Verwalten eines Fernkommunikationsdienstes (S) nach Anspruch 9 umfasst.

10. Computerprogramm, das dazu geeignet ist, in einer Vorrichtung zum Verwalten nach Anspruch 9 umgesetzt zu werden, wobei das Programm Codeanweisungen umfasst, die bei Ausführung des Programms durch einen Prozessor die Schritte des nach Anspruch 1 definierten Verfahrens realisiert.

## Claims

1. Method for managing a remote communication service (S) offered by an object (4, 5) of a local area network to at least one terminal (7a, 7b) of a communications network (1, 3), the terminal and the object being capable of communicating via a gateway (2) of the local area network (1), said method being **characterized in that** it comprises the following steps executed by a service provision device providing the service (2, DMAS) for supplying the terminal with at least one service address (IP_X) for accessing the service of the object:
- establishing (E1) a list of associations (AS_X) between at least one service address (IP_X) and at least one feature (STR, COD, BR, L/D) associated with the service;
- obtaining (E6, E'6) at least one criterion (STR, COD, BR, L/D) linked to the terminal;
- selecting (E6) at least one association (AS_X) in the list of associations according to said criterion linked to the terminal (STR, COD, BR, L/D);
- sending to the terminal (E7, E'4) at least one address of the service (IP_X) associated with said at least one selected association (AS_X).

2. Method according to Claim 1, **characterized in that** the selection step for selecting at least one association is preceded by steps of:
- sending (E4) to the terminal an address (IP_G) of the service gateway (2);
- receiving (E5), from the terminal, a request (GETCAM@) for accessing the service;
- determining (E5) at least said criterion linked to the terminal (STR, COD, BR, L/D) according to the request received.

3. Method according to Claim 1, in which:
- said at least one feature (STR, COD, BR, L/D) of the service is related to a connection criterion (L/D) indicating whether the terminal (7a, 7b) is connected to the local area network of the service gateway (2);
- the criterion (STR, COD, BR, L/D) linked to the terminal indicates whether the terminal is connected to the local area network of the service gateway.

4. Method according to Claim 3, **characterized in that** the selection step determines:
- a first association (AS_L1, L2, L3) for a connection criterion indicating that the terminal (7b) is connected to the local area network of the service gateway (2);
- a second association (AS_D1, D2, D3) for a connection criterion indicating that the terminal (7a) is not connected to the local area network of the service gateway (2);
and **in that** the step of sending transmits to the terminal the address of the service of the first association and the address of the service of the second association that have been determined.

5. Method according to Claim 1, in which:
- said at least one feature (STR, COD, BR, L/D) of the service is related to a bitrate criterion (COD, BR).
- the criterion (STR, COD, BR, L/D) linked to the terminal indicates the useful bitrate of the terminal.

6. Method according to Claim 1, in which:
- said at least one feature (STR, COD, BR, L/D) of the service indicates the protocol used for communication (RTSP, HTTP);
- the criterion linked to the terminal indicates whether the terminal is capable of managing this type of protocol in said communication network.

7. Method according to Claim 1, **characterized in that** it also comprises a step of discovery (E0) of the connected object.

8. Device (DMAS) for managing a remote communication service (S) offered by an object (4, 5) of a local area network to at least one terminal (7a, 7b) of a communications network (1, 3), the terminal and the object being capable of communicating via a gateway (2) of the local area network (1), the device being **characterized in that** it comprises the following modules for supplying the terminal with at least one service address (IP_X) for accessing the service of the object:
- an establishment module (ASS) for establishing a list of associations (AS_X) between at least one service address (IP_X) and at least one feature (STR, COD, BR, L/D) associated with the service;
- an obtainment module (SEL, E6, E'6) for obtaining at least one criterion (STR, COD, BR, L/D) linked to the terminal;
- a selection module (SEL) for selecting at least one association (AS_X) in the list of associations according to said criterion (STR, COD, BR, L/D) linked to the terminal;
- a sending module (WIFI, ETH) for sending to the terminal (7a, 7b) at least one address of the service (IP_X) associated with said at least one selected association (AS_X).

9. Gateway (2) including a device for managing a remote communication service (S) according to Claim 9.

10. Computer program capable of being implemented on a management device according to Claim 9, the program including code instructions which, when the program is executed by a processor, performs the steps of the method defined according to Claim 1.
